# EUROPEAN PATENT APPLICATION

(11) **EP 4 345 724 A1**
(43) Date of publication of application: **03.04.2024**
(21) Application number: 22836736.3
(22) Date of filing: 24.06.2022
(51) Int. Cl.: G06Q 30/02, G06Q 30/0282, G06Q 30/0601, G06Q 50/00

(54) **COMMODITY EVALUATION METHOD AND APPARATUS, AND CLIENT**

(30) Priority: 09.07.2021 CN 202110776774
(71) Applicant: BEIJING BYTEDANCE NETWORK TECHNOLOGY CO., LTD., Beijing 100041 (CN)
(72) Inventor: NIU, Huizhen, Beijing 100086 (CN); ZHOU, Jingrou, Beijing 100086 (CN); SUI, Xinjie, Beijing 100086 (CN); ZHONG, Xiaojiao, Beijing 100086 (CN); FU, Pingfei, Beijing 100086 (CN); YU, Yajie, Beijing 100086 (CN); CHEN, Qiang, Beijing 100086 (CN)
(74) Representative: Dentons UK and Middle East LLP
(86) International application number: PCT/CN2022/100949
(87) International publication number: WO 2023/279982

(57) **Abstract**

The present disclosure relates to a product review method, apparatus and client. The method comprises: obtaining review material of the target product if a target product is reviewed; determining multimedia content of the target product on the basis of the review material of the target product; and after receiving a post instruction for the target product, sending the multimedia content of the target product to a server.

## Description

### CROSS-REFERENCE TO RELATED APPLICATIONS

This application is based on and claims priority of the Chinese application number 202110776774.3, filed on July 9, 2021, the disclosure content of which is hereby incorporated into this application in its entirety.

### TECHNICAL FIELD

The present disclosure relates to the field of Internet technology, and in particular to a product review method, apparatus and client.

### BACKGROUND

With the continuous development of Internet technology, users often review purchased products in clients by using methods such as uploading pictures, uploading videos, and posting texts etc., to reflect usage experience of the users, thereby providing users with interactive methods to review the products.

### SUMMARY

The present disclosure provides a product review method, apparatus and client.

In a first aspect, the present disclosure provides a product review method, the method comprising:
while reviewing a target product, obtaining review material of the target product;
determining multimedia content of the target product based on the review material of the target product; and
after receiving a post instruction for the target product, sending the multimedia content of the target product to a server.

In one possible design, the method further comprises:
receiving the multimedia content of the target product from the server; and
after receiving a playback instruction for the multimedia content of the target product, playing the multimedia content of the target product.

In one possible design, the multimedia content of the target product comprises: a playback screen and a type tag, the type tag being used to indicate that the multimedia content of the target product is determined based on the review material of the target product;
the method further comprises:
after receiving a trigger instruction for the type tag, displaying a product details page of the target product, the product details page of the target product being used to display product details of the target product and trigger the purchase of the target product.

In one possible design, the method further comprises:
after receiving a viewing instruction for comment material of the target product, jumping to a review details page of the target product, and displaying the comment material of the target product on the review details page of the target product.

In one possible design, after receiving a post instruction for the target product, the method further comprises: sending the review material of the target product to the server.

In one possible design, the method further comprises:
receiving comment material of the target product from the server;
after receiving a viewing instruction for the comment material of the target product, displaying the comment material of the target product on the review details page of the target product.

In one possible design, when displaying a first control, a second control and a third control on a review post page of the target product, the method comprises:
after receiving a trigger instruction for the first control, obtaining the review material of the target product;
after receiving a trigger instruction for the second control, determining to send multimedia content of the target product generated based on the review material of the target product to the server; and
after receiving a trigger instruction for the third control, determining the multimedia content of the target product based on the review material of the target product and playback parameters of the multimedia content of the target product.

In one possible design, the method comprises:
generating multimedia content of the target product based on the review material of the target product and the playback parameters of the multimedia content of the target product;
playing the multimedia content of the target product and displaying a fourth control on a preview page of the target product;
after receiving a trigger instruction for the fourth control, displaying an editing page of the target product, the editing page of the target product being used to perform at least one type of processings of editing music, cropping multimedia content, adding text, adding stickers, adding special effects or setting permissions to the multimedia content of the target product;
after receiving a processing instruction for the editing page of the target product, updating the playback parameters of the multimedia content of the target product; and determining the multimedia content of the target product based on the updated playback parameters of the multimedia content of the target product;
determining the multimedia content of the target product if a processing instruction for the editing page of the target product is not received, or after receiving a no processing instruction for the editing page of the target product.

In one possible design, the method further comprises:
after receiving a pause playback instruction for the multimedia content of the target product, pausing the playback of the multimedia content of the target product on the preview page of the target product.

In one possible design, the method further comprises:
displaying a fifth control on the preview page of the target product or the editing page of the target product;
after receiving a trigger instruction for the fifth control, sending the review material of the target product and the multimedia content of the target product to the server.

In one possible design, the method further comprises:
after sending the review material of the target product and the multimedia content of the target product successfully to the server, displaying that the target product has been successfully reviewed.

In one possible design, the review material of the target product includes at least one of picture review and multimedia review.

In one possible design, the review material of the target product further includes: text review and/or a type tag, the type tag being used to indicate that the multimedia content of the target product is determined based on the review material of the target product.

In a second aspect, the present disclosure provides a product review apparatus, the apparatus comprising:
an obtaining module configured to obtain review material of a target product while reviewing the target product;
a determination module configured to determine multimedia content of the target product based on the review material of the target product; and
a sending module configured to send the multimedia content of the target product to a server after receiving a post instruction for the target product.

In one possible design, the apparatus further comprises:
a receiving module configured to receive the multimedia content of the target product from the server; and
a display module configured to play the multimedia content of the target product after receiving a playback instruction for the multimedia content of the target product.

In one possible design, the multimedia content of the target product comprises: a playback screen and a type tag, the type tag being used to indicate that the multimedia content of the target product is determined based on the review material of the target product; and
the display module is further configured to display a product details page of the target product after receiving a trigger instruction for the type tag, the product details page of the target product being used to display product details of the target product and trigger the purchase of the target product.

In one possible design, the display module is further configured to jump to a review details page of the target product after receiving a viewing instruction for comment material of the target product, and display the comment material of the target product on the review details page of the target product.

In one possible design, the sending module is further configured to send the review material of the target product to the server after receiving a post instruction for the target product.

In one possible design, the receiving module is further configured to receive comment material of the target product from the server; and
the display module is further configured to display the comment material of the target product on the review details page of the target product after receiving a viewing instruction for the comment material of the target product.

In one possible design, the obtaining module is specifically configured to, when displaying a first control, a second control and a third control on a review post page of the target product, obtain the review material of target product after receiving a trigger instruction for the first control;
the determination module is configured to determine to send multimedia content of the target product generated based on the review material of the target product to the server after receiving a trigger instruction for the second control; and
the determination module is further configured to determine the multimedia content of the target product based on the review material of the target product and playback parameters of the multimedia content of the target product after receiving a trigger instruction for the third control.

In one possible design, the determination module is specifically configured to generate multimedia content of the target product based on the review material of the target product and the playback parameters of the multimedia content of the target product;
the display module is further configured to play the multimedia content of the target product and display a fourth control on a preview page of the target product;
the display module is further configured to display an editing page of the target product after receiving a trigger instruction for the fourth control, the editing page of the target product being used to perform at least one type of processings of editing music, cropping multimedia content, adding text, adding stickers, adding special effects or setting permissions to the multimedia content of the target product; and
the determination module is also specifically configured to update the playback parameters of the multimedia content of the target product after receiving a processing instruction for the editing page of the target product; determine the multimedia content of the target product based on the updated playback parameters of the multimedia content of the target product; and determine the multimedia content of the target product if a processing instruction for the editing page of the target product is not received, or after receiving a no processing instruction for the editing page of the target product.

In one possible design, the display module is further configured to pause the playback of the multimedia content of the target product on the preview page of the target product after receiving a pause playback instruction for the multimedia content of the target product.

In one possible design, the display module is further configured to display a fifth control on the preview page of the target product or the editing page of the target product; and
the sending module is further configured to send the review material of the target product and the multimedia content of the target product to the server after receiving a trigger instruction for the fifth control.

In one possible design, the display module is further configured to display that the target product has been successfully reviewed after the review material of the target product and the multimedia content of the target product are successfully sent to the server.

In one possible design, the review material of the target product includes at least one of picture review and multimedia review.

In one possible design, the review material of the target product further includes: at least one of text review and a type tag, the type tag being used to indicate that the multimedia content of the target product is determined based on the review material of the target product.

Beneficial effects of the product review apparatus provided in the above second aspect and the above possible designs of the second aspect may be referred to the beneficial effects brought about by the above first aspect and various possible implementations of the first aspect, which will not be repeated here again.

In a third aspect, the present disclosure provides a client, comprising: a memory and a processor; the memory is configured to store program instructions; the processor is configured to call the program instructions in the memory so that the client executes the product review method in the first aspect and any one of the possible designs of the first aspects.

In a fourth aspect, the present disclosure provides a computer storage medium including computer instructions, which, when run on an electronic device, cause the electronic device to execute the product review method in the first aspect and any one of the possible designs of the first aspect.

In a fifth aspect, the present disclosure provides a computer program product, which, when run on a computer, causes the computer to execute the product review method in the first aspect and any one of the possible designs of the first aspect.

In a sixth aspect, the present disclosure provides a chip system, which is applied to an electronic device including a display, a memory, and a sensor; the chip system comprising: a processor; when the processor executes computer instructions stored in a memory, the electronic device executes the product review method in the first aspect and any one of the possible designs of the first aspect.

### BRIEF DESCRIPTION OF THE DRAWINGS

The accompanying drawings, which are incorporated in and constitute a part of this specification, illustrate embodiments consistent with the disclosure and serve to explain the principles of the disclosure together with the description.

In order to more clearly illustrate the technical solutions in the embodiments of the present disclosure or related arts, the following will briefly introduce the drawings needed when describing the embodiments or related arts. Obviously, for those of ordinary skill in the art, other drawings can also be obtained based on these drawings without incurring any creative effort.
FIG. 1 is a schematic architectural diagram of a communication system provided by an embodiment of the present disclosure;
FIGS. 2A-2P are schematic diagrams of human-computer interaction interfaces provided by embodiments of the present disclosure;
FIG. 3 is a schematic flow chart of a product review method provided by an embodiment of the present disclosure;
FIG. 4 is a schematic structural diagram of a product review apparatus provided by an embodiment of the present disclosure;
FIG. 5 is a schematic structural diagram of a product review apparatus provided by an embodiment of the present disclosure.

### DETAILED DESCRIPTION

In order to understand the above objects, features and advantages of the present disclosure more clearly, the solutions of the present disclosure will be further described below. It should be noted that, without conflict, the embodiments of the present disclosure and the features in the embodiments can be combined with each other.

Many specific details are set forth in the following description to facilitate to fully understand the present disclosure, but the present disclosure can also be implemented in other ways different from those described here; obviously, the embodiments in the description are only part of the embodiments of the present disclosure, not all of the embodiments thereof.

With the continuous development of Internet technology, users often review purchased products in clients by using methods such as uploading pictures, uploading videos, and posting texts etc., to reflect usage experience of the users, thereby providing users with interactive methods to review the products.

However, the existing interaction methods are simplex, which is not conducive for users to continue to interact with the product, thereby reducing the interactive experience for users to review the product.

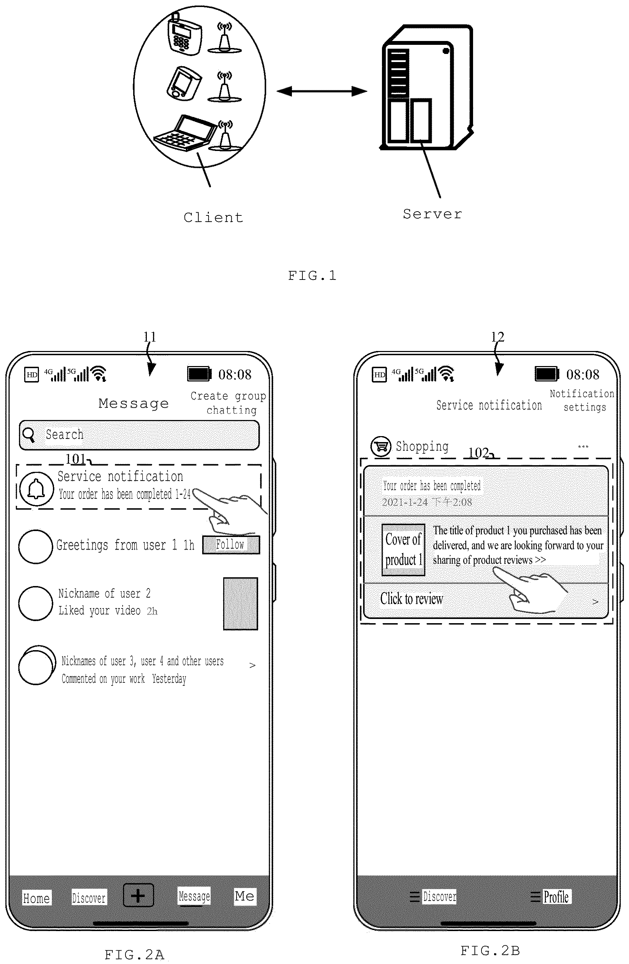

Please refer to FIG. 1, which is a schematic architectural diagram of a communication system provided according to some embodiments of the present disclosure.

As shown in FIG. 1, the communication system provided by the present disclosure may include: a server and a client, and the server and the client can communicate with each other.

Wherein, the client has the functions of reviewing products and presenting product reviews. The client can execute the product review method of the disclosure through an electronic device or an application (APP), web page, or public account in the electronic device. The Electronic device may be a device such a mobile phone, a tablet, a wearable device, a vehicle-mounted device, an augmented reality (AR)/virtual reality (VR) device, a laptop, an ultra-mobile personal computer (UMPC), a netbook, a Personal Digital Assistant (PDA), a smart TV, a smart screen, a high-definition TV, a 4K TV, a smart speaker, a smart projector etc. The disclosure does not have any limitations on the specific type of the electronic device.

Wherein, the disclosure does not limit the type of the operating system of the electronic device. For example, Android system, Linux system, Windows system, iOS system, etc.

Based on the above description, in combination with FIG. 2A-2P, taking the electronic device being a mobile phone and the application installed in the mobile phone being a short video social APP (referred to as Application 1) as an example, the specific implementation process of the product review method provided by the present disclosure will be introduced.

Please refer to FIGS. 2A-2P. FIGS. 2A-2P are schematic diagrams of human-computer interaction interfaces provided by embodiments of the present disclosure.

Application 1 may display a user interface 11 as exemplarily shown in FIG. 2A on the mobile phone, and the user interface 11 is used to display a notification page in Application 1. Wherein, the notification page is a page in Application 1, and the notification page is used to display notification messages such as services, greetings, likes, comments, favorites, etc. This disclosure does not limit the specific implementations of the user interface 11 and the notification page.

In FIG. 2A, the user interface 11 may include: area 101, which is used to aggregate and display notification messages of service types in the notification page, and trigger specific display of a notification message of a service type. Wherein, the disclosure does not limit the specific implementation of area 101.

After receiving an operation such as clicking the area 101 performed by a user in the user interface 11 shown in FIG. 2A, the Application 1 can display a user interface 12 exemplarily shown in FIG. 2B on the mobile phone. The user interface 12 is used to display specific content of a notification message of a service type. The disclosure does not limit the specific implementation of the user interface 12.

In FIG. 2B, the user interface 12 may include: area 102, which is used to display a notification message 1 belonging to a service type. Wherein, the notification message 1 is used to indicate that the user has completed an order for product 1, and can be displayed using content such as the order completion time, a cover of product 1, a title of product 1, etc. In addition, the notification message 1 is also used to indicate that the user can review product 1, and can be triggered by ways of area or a control, etc., for example.

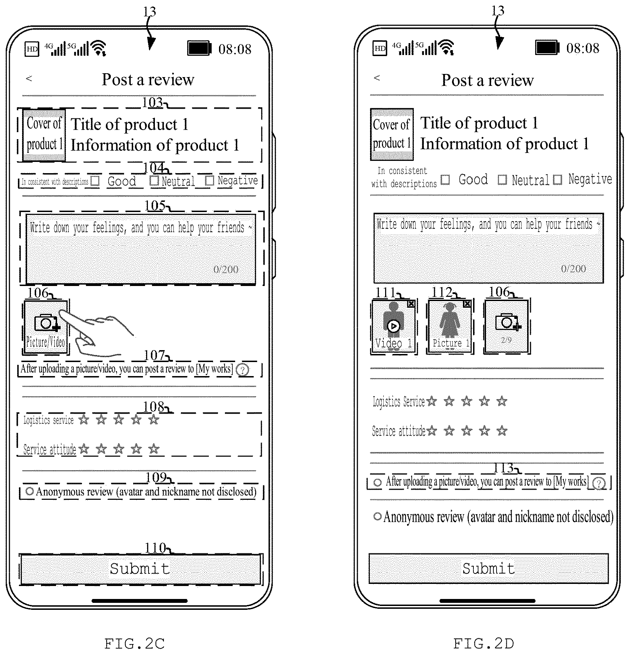

After receiving an operation such as clicking the area 102 performed by the user in the user interface 12 shown in FIG. 2B, the Application 1 can display a user interface 13 exemplarily shown in FIG. 2C on the mobile phone. The user interface 13 is used to display a review post page of product 1 in the Application 1. The review post page of product 1 is a page of the Application 1, which is used to trigger the review of product 1. Wherein, the disclosure does not limit the specific implementation of the user interface 13 and the review post page of product 1.

In FIG. 2C, the user interface 13 may include: area 103, area 104, area 105, control 106, area 107, area 108, area 109 and control 110.

The area 103 is used to display specific content of product 1 such as cover, title, information, etc.

The area 104 is used to trigger a review of whether the specific content of product 1 matches the description. Ratings such as good vote, neutral vote, and negative vote can be used to review the degree to which the description of the specific content of product 1 matches.

The area 105 is used to input a text review of product 1 (such as information of review 1), and to display the text review of product 1. The text review mentioned in the disclosure refers to a review by using methods such as Chinese, characters, letters, numbers, etc. to review products. In addition, the area 105 is also used to display the number and total amount of text reviews of product 1.

The control 106 is used to trigger the uploading of picture review and/or multimedia review of product 1. The picture review mentioned in the disclosure refers to a review by using pictures to review products, and the multimedia review refers to a review by using multimedia to review products.

The area 107 is used to prompt that, after the picture review and/or multimedia review of product 1 is uploaded, the picture review and/or multimedia review of product 1 can be sent to a server in the form of multimedia so that it can be postd in the Application 1 through the server.

The area 108 is used to trigger a review of the logistics service and service attitude of product 1. The logistics service and service attitude of product 1 can be reviewed by methods such as scoring or selecting star ratings.

The area 109 is used to trigger anonymous review of product 1. The anonymous review here can be understood as disclosing review material of product 1, but not disclosing user information such as account avatar and account nickname of the user who reviewed product 1.

The control 110 is used to trigger sending related content, such as uploaded multimedia review, uploaded picture review, input text review, selected service review, selected logistics review, selected anonymous review, multimedia review in the form of multimedia and/or picture review, etc. , for reviewing of product 1 to the server.

It should be noted that the area 103, the area 104, the area 105, the area 107, the area 108 and the area 109 are optional.

After receiving an operation such as clicking the control 106 performed by the user in the user interface 13 shown in FIG. 2C, the Application 1 can display controls 111, 112 and 113 exemplarily shown in FIG. 2D on the user interface 13.

The control 111 is used to display a thumbnail of the multimedia review of product 1 uploaded by the user. The disclosure does not limit the specific implementation of the thumbnail of the multimedia review of product 1. In some embodiments, the thumbnail of the multimedia review of product 1 can be displayed in a manner such as the cover or a frame of screen of video 1. Therefore, after receiving a trigger operation such as clicking the control 111 by the user, the Application 1 can play the video 1 to facilitate the user to view the multimedia review of the product 1 in time.

In addition, the thumbnail of the multimedia review of product 1 may also display a delete control. Therefore, after receiving a trigger operation such as clicking the delete control by the user, the Application 1 can delete the thumbnail of the multimedia review of product 1 to facilitate the user to change the review of product 1 at any time.

The control 112 is used to display a thumbnail of the image review of product 1 uploaded by the user. The disclosure does not limit the specific implementation of the thumbnail for image review of product 1. In some embodiments, the thumbnail of the picture review of product 1 can be displayed as picture 1. Therefore, after receiving a trigger operation such as clicking the control 112 by the user, the Application 1 can display picture 1 to facilitate the user to view the picture review of product 1 in time.

In addition, the thumbnail of the picture review of product 1 may also display a delete control. Therefore, after receiving a trigger operation such as clicking the delete control by the user, the Application 1 can delete the thumbnail of the picture review of product 1 to facilitate the user to change the review of product 1 at any time.

It should be noted that the disclosure does not limit the specific implementation of the area 111 and the area 112. In some embodiments, the area 111, the area 112, and the control 106 may be displayed side by side. The disclosure does not limit the arrangement order of the area 111, the area 112 and the control 106. In addition, the control 106 can also display the number and total amount of uploaded reviews of product 1, so as to conveniently prompt the user with the number of pictures or multimedia that can be uploaded currently.

In addition, the disclosure does not limit the order in which the multimedia review of product 1 and the picture review of product 1 are uploaded. In some embodiments, the thumbnail of the multimedia review of product 1 and the thumbnail of the picture review of product 1 may be together displayed in the user interface 13 by triggering the control 106 once. In other embodiments, the thumbnail of the multimedia review of product 1 and the thumbnail of the picture review of product 1 may be displayed in the user interface 13 by triggering the control 106 respectively.

In addition, the Application 1 may upload picture reviews by triggering the control 106, and may upload multimedia reviews by triggering the control 106, as well as may upload picture reviews and multimedia reviews by triggering the control 106.

The area 113 is used to trigger whether to send the multimedia review of product 1 and the picture review of product 1 to the server in the form of multimedia. The disclosure does not limit the specific implementation of the area 113. In some embodiments, the area 113 may be displayed above the area 109.

It should be noted that the area 113 is optional. In addition to the area 113 shown in FIG. 2D, the Application 1 may display the area 113 in the user interface 13 shown in FIG. 2C. Alternatively, the Application 1 may display the area 113 for triggering by default sending the multimedia review of the product 1 and the picture review of the product 1 to the server in the form of multimedia in the user interface 13 shown in FIG. 2C or 2D.

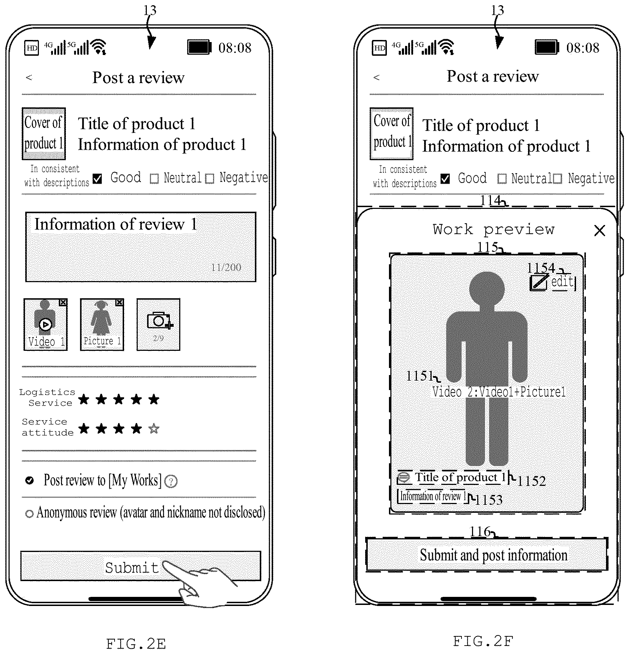

After receiving an operation performed by the user in the user interface 13 shown in FIG. 2D, such as an operation of selecting "good vote" in area 104, an operation of inputting "information of review 1" in area 105, an operation of selecting "5-star logistics service and 4-star service attitude" in area 108, and an operation of selecting "sending the multimedia review of product 1 and the picture review of product 1 to the server in the form of multimedia" in area 113, the Application 1 may display the user interface 13 exemplarily shown in FIG. 2E on the mobile phone.

After receiving an operation performed by the user in the user interface 13 shown in FIG. 2E as in the control 110, the Application 1 may display a window 114 exemplarily shown in FIG. 2F on the user interface 13, the window 114 being used to display a preview page of product 1 in the Application 1. Wherein, the preview page of product 1 is a page in the Application 1, the preview page of product 1 being used to play video 2, and the video 2 is multimedia content obtained by processing the multimedia review of product 1 and the image review of product 1 by the Application 1 using methods such as transitions and splicing etc. The disclosure does not limit the specific implementations of the window 114, the preview page of product 1 and the video 2.

In FIG. 2F, the window 114 may include: area 115 and a control 116. The area 115 may include: area 1151, area 1152, area 1153 and control 1154.

The area 1151, when in a playback mode, is used to play a playback screen of the video 2.

The area 1152 is used to display content such as the type tag of the video 2 and the title of product 1. Wherein, the type tag mentioned in the disclosure is used to indicate that the video 2 is determined based on the uploaded picture review and/or multimedia review when reviewing product 1.

The area 1153 is used to display content such as the text review of product 1(i.e., the information of review 1 entered in area 105) .

The control 1154 is used to trigger the display of the editing page of product 1. Wherein, the editing page of product 1 is a page in the Application 1. The editing page of product 1 is used to trigger various types of processing for video 2, such as music editing, multimedia content cropping, text addition, sticker addition, special effects addition, etc., as well as play the video 2 with different playback effects. Therefore, the playback parameters of the video 2 can be adjusted so that video 2 has different playback effects. In addition, the editing page of product 1 is also used to trigger a processing of permission setting for video 2, so that the playback permission of the video 2 is determined based on the user's subjective wishes.

It should be noted that the disclosure does not limit the display position, display style and other parameters of the control 1154. In some embodiments, the control 1154 may be displayed floating on the upper right side of the area 1151. In addition, when the control 1154 is not triggered, the playback parameters of the video 2 can remain to be the last adjusted playback parameters, or default playback parameters.

The control 116 is used to trigger sending related content, such as uploaded multimedia review, uploaded picture review, input text review, selected service review, selected logistics review, selected anonymous review, and the video 2 with adjusted playback parameters, for reviewing of product 1 to the server.

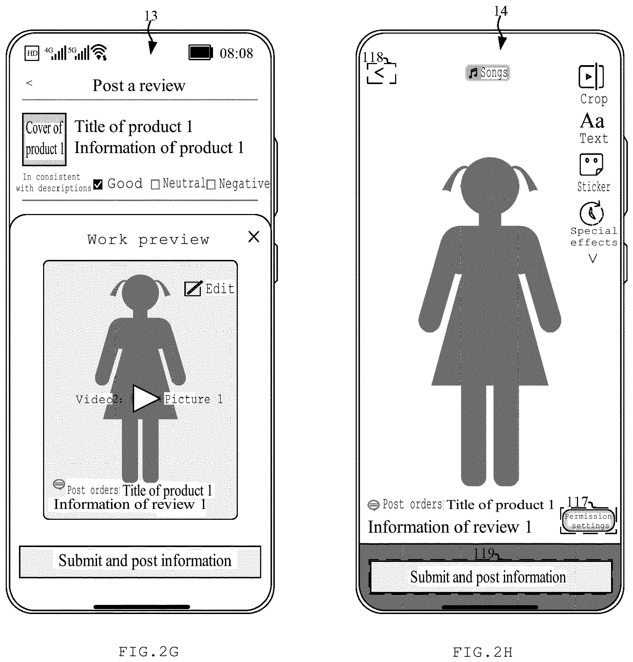

After receiving an operation such as clicking the area 1151 performed by the user in the user interface 13 shown in FIG. 2F, the Application 1 can display the area 1151 in a stop playing state as exemplarily shown in FIG. 2G on the window 114, for stopping playing the video 2 playback screen.

After receiving an operation such as clicking the control 1154 performed by the user in the user interface 13 shown in FIG. 2F, the Application 1 can display a user interface 14 exemplarily shown in FIG. 2H on the mobile phone, the user interface 14 being used to display the editing page of product 1 in Application 1. The disclosure does not limit the specific implementation of the user interface 14.

Therefore, by means of the user interface 14, the Application 1 can provide the user with an entrance to adjust the playback parameters of the video 2, to facilitate the user to change the playback effect of the video 2 based on subjective wishes. Moreover, after the playback parameters of the video 2 are adjusted, the area 1151 can play the video 2 with adjusted playback parameters.

In FIG. 2H, the user interface 14 further includes: a control 117, a control 118 and a control 119.

The control 117 is used to trigger the processing of permission setting for the video 2.

The control 118 is used to trigger clearing the adjustment of the playback parameters of the video 2, and return to the window 114 shown in FIG. 2F.

The control 119 is used to trigger sending related content, such as uploaded multimedia review, uploaded picture review, input text review, selected service review, selected logistics review, selected anonymous review and the video 2, etc., for reviewing of product 1 to the server.

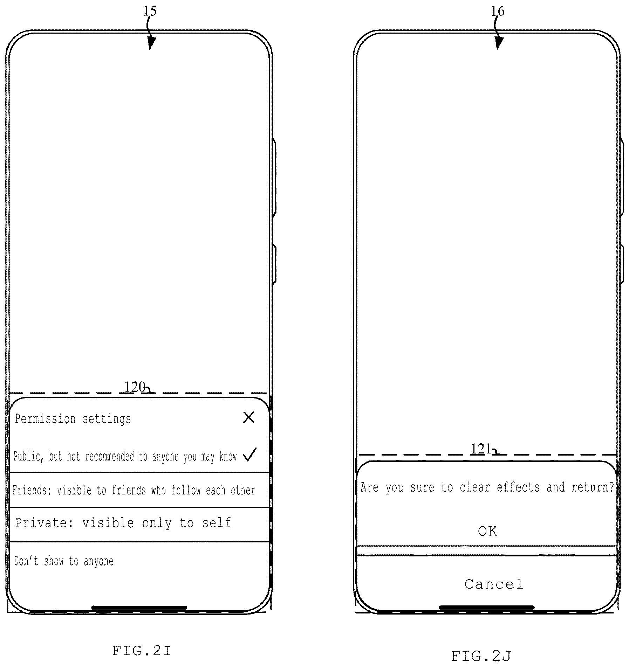

After receiving an operation such as clicking the control 117 performed by the user in the user interface 14 shown in FIG. 2H, the Application 1 can display a user interface 15 exemplarily shown in FIG. 2I on the mobile phone, the user interface 15 being used to trigger the processing of permission setting for the video 2. The disclosure does not limit the specific implementation of the user interface 15.

In FIG. 2I, the user interface 15 may include: a window 120. The window 120 is used to provide options for playback permissions for the video 2, such as publishing to all users, publishing to following users, publishing only to self, and blocking specific users, etc. Therefore, after selecting a playback permission for the video 2 in the window 120, the Application 1 can display the user interface 14 exemplarily shown in FIG. 2H on the mobile phone.

After receiving an operation such as clicking the control 118 performed by the user in the user interface 14 shown in FIG. 2H, the Application 1 can display a user interface 16 exemplarily shown in FIG. 2J on the mobile phone. The user interface 16 being used to trigger clearing the adjustment of the playback parameters of the video 2, and return to the window 114 shown in FIG. 2F. The disclosure does not limit the specific implementation of the user interface 16.

In FIG. 2J, the user interface 16 may include: a window 121. The window 121 is used to provide options for clearing the adjustment of the playback parameters of the video 2 and canceling clearing the adjustment of the playback parameters of the video 2. Therefore, after selecting clearing the adjustment of the playback parameters of the video 2 in the window 121, the Application 1 can display the window 114 as exemplarily shown in FIG. 2F on the mobile phone. After selecting canceling clearing the adjustment of the playback parameters of the video 2 in the window 121, the Application 1 can display the user interface 14 as exemplarily shown in FIG. 2H on the mobile phone.

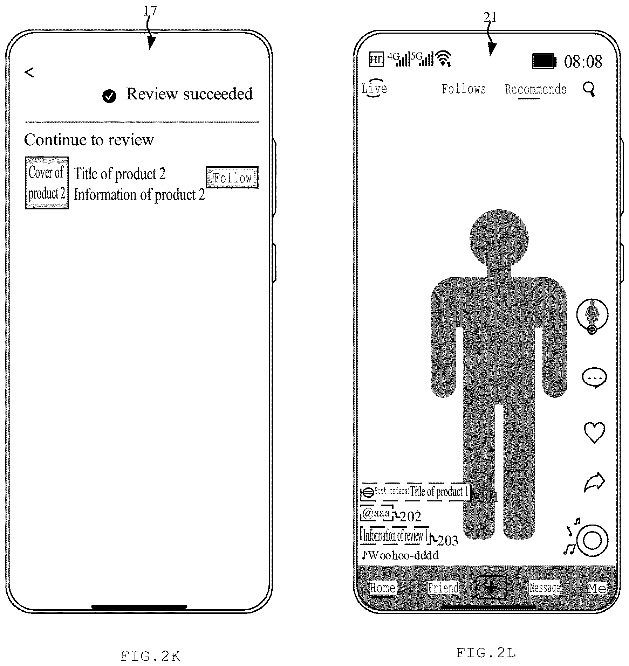

After receiving an operation such as clicking the control 116 performed by the user in the window 114 shown in FIG. 2F/2G, or after receiving an operation such as clicking the control 119 performed by the user in the user interface 14 shown in FIG. 2H, the Application 1 can display a user interface 17 as exemplarily shown in FIG. 2K on the mobile phone. The user interface 17 is used to notify that the product 1 has been successfully reviewed. The disclosure does not limit the specific implementation of the user interface 17. In some embodiments, the user interface 17 may be represented by text, identifications, etc.

Therefore, the Application 1 sends related content, such as uploaded multimedia review, uploaded picture review, input text review, selected service review, selected logistics review, selected anonymous review, and the video 2, etc., for reviewing product 1 to the server.

After the Application 1 receives the relevant content for reviewing product 1 from the server, if the user corresponding to the account nickname currently logged in in the Application 1 is not a user who commented on the product 1, the Application 1 can display a user interface 21 as exemplarily shown in FIG. 2L on the mobile phone, the user interface 21 being used to display the playback page 1 in the Application 1. Wherein, the playback page 1 is a page in the Application 1, and the playback page 1 is used to play the video 2. The disclosure does not limit the specific implementation of the user interface 21 and the playback page 1.

In FIG. 2L, the user interface 21 may include: area 201, area 202 and area 203. The area 201 is used to display content such as the type tag of the video 2, the title of product 1, etc. The area 202 is used to display the account nickname of the user who posted the video 2. The area 203 is used to display text review of product 1 (that is, the information of comment 1).

In addition, the user interface 22 may further include: background music for displaying the video 2, etc.

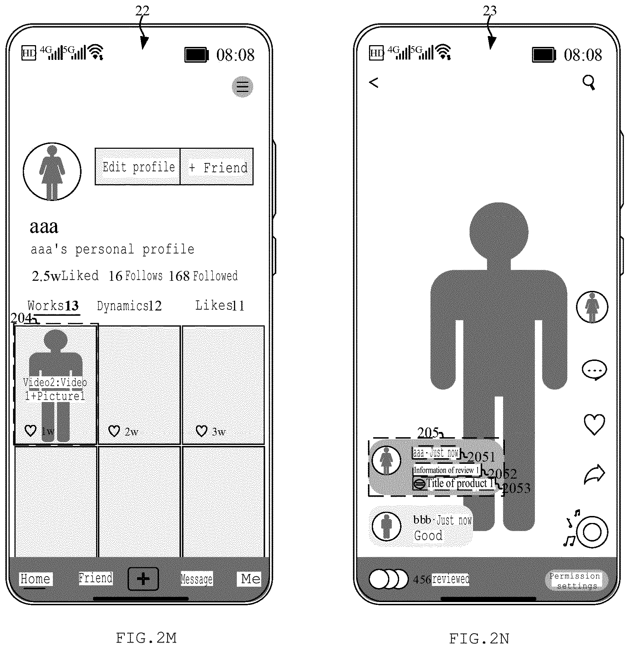

After the Application 1 receives the related content for reviewing product 1 from the server, if the user corresponding to the account nickname currently logged in in the Application 1 is a user who commented on product 1, the application can display a user interface as exemplarily shown in FIG. 2M on the mobile phone, the user interface 22 being used to display an account page corresponding to the account nickname currently logged in in the Application 1. Wherein, the account page is a page in the Application 1. The account page is used to display information such as account avatar, account nickname, personal profile, work, updates, likes, the total number of likes of the work, the total number of following users, the total number of works liked and the like, of the user corresponding to the account nickname currently logged in in the Application 1. The disclosure does not limit the specific implementations of the user interface 22 and the account page.

In FIG. 2M, the user interface 22 may include: a control 204, which is used to display a thumbnail of the video 2, for example, display by using the cover of the video 2 or a frame of screen. In addition, the control 204 is also used to display the total number of likes for the video 2. The disclosure does not limit the specific implementation of the control 204.

After receiving an operation such as clicking the control 204 performed by the user in the user interface 22 shown in FIG. 2 M, the Application 1 can display a user interface 23 exemplarily shown in FIG. 2N on the mobile phone, the user interface 23 being used to display a playback page 2 in the Application 1. Wherein, the playback page 2 is a page in the Application 1, and the playback page 2 is used to play the video 2. The disclosure does not limit the specific implementations of the user interface 23 and the playback page 2.

In FIG. 2N, the user interface 23 may include area 205, and the area 205 may include area 2051, area 2052, and area 2053. The area 2051 is used to display the account nickname of the user who posted the video 2, the post time of the video 2, etc. The area 2052 is used to display the text review of product 1 (that is, the information of comment 1). The area 2053 is used to display content such as the type tag of the video 2, the title of product 1 and the like. In addition, the area 205 may also be used to display content such as the account avatar of the user who posted the video 2, etc.

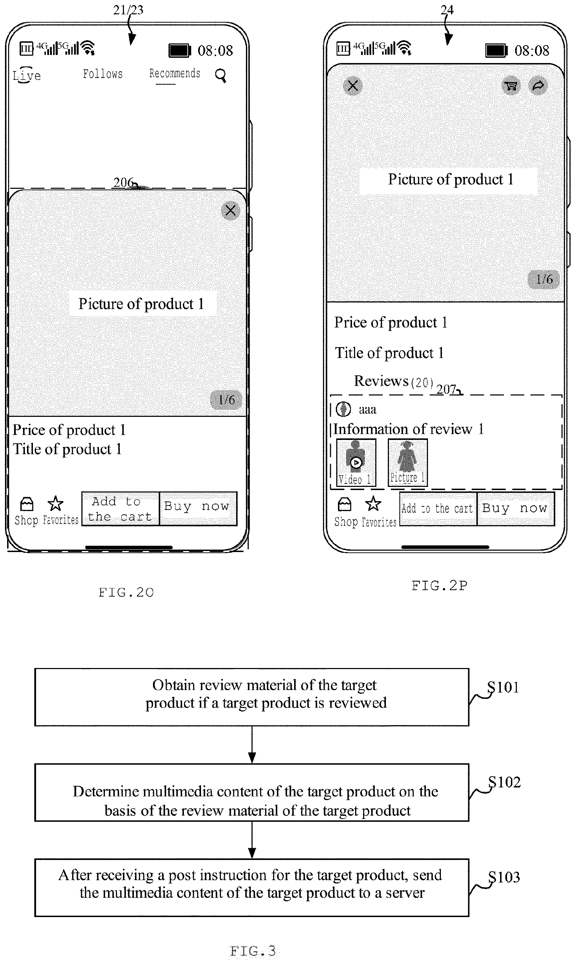

After receiving an operation such as clicking the area 201 performed by the user in the user interface 21 shown in FIG. 2L, the Application 1 may display a window 206 exemplarily shown in FIG. 2O on the user interface 21. Alternatively, after receiving an operation such as clicking area 2053 performed by the user in the user interface 23 shown in FIG. 2N, the Application 1 may display a window 206 exemplarily shown in FIG. 2O on the user interface 23.

Wherein, the window 206 is used to display a portion of content of the product details page of product 1 in the Application 1. The product details page of product 1 is a page of the Application 1. The product details page of product 1 is used to display specific information such as pictures, price, title, comments, etc. of product 1, and it is also used to trigger entering to a store to which product 1 belongs, adding product 1 to favorites, adding product 1 to a shopping cart, and purchasing product 1. The disclosure does not limit the specific implementations of the window 206 and the product details page of product 1.

After the Application 1 receives the related content for reviewing product 1 from the server, or after receiving a sliding operation such as sliding up performed by the user in the window 206 shown in FIG. 2O, the Application 1 can display a user interface 24 as exemplarily shown in FIG. 2P on the mobile phone. The user interface 24 is used to display the product details page of product 1 in the Application 1. The disclosure does not limit the specific implementation of the user interface 24.

In FIG. 2P, the user interface 24 may include: area 207. The area 207 is used to display user information such as account avatar, account nickname, etc. of the user who posted the video 2, as well as content such as text review, picture review, multimedia review of product 1, etc. In addition, the area 207 is also used to trigger the display of the review details page of product 1. The review details page of product 1 is a page of the Application 1, which is used to display user information of all users who have purchased product 1, and content such as text review, picture review, multimedia review, etc., for commenting of product 1.

Based on the description of the embodiments in FIG. 1 and FIG. 2A-2P, the embodiment of the disclosure will describe the product review method provided by the disclosure by taking take the client in FIG. 1 as an example, in combination with the drawings and application scenarios.

Please refer to FIG. 3, which is a schematic flow chart of a product review method provided by an embodiment of the present disclosure. As shown in FIG. 3, the product review method provided by the present disclosure may include:

S101. while reviewing a target product, obtaining review material of the target product.

While reviewing the target product, a user can load or import comment material of the target product to a client, so that the client can obtain the review material of the target product.

Wherein, the disclosure does not limit parameters such as type, quantity, etc. of the target product. Furthermore, the comment material of the target product is used to comment on the target product, and the disclosure does not limit the specific implementation of the review material of the target product.

In some embodiments, the review material of the target product may include at least one of picture review and multimedia review. In other embodiments, the review material of the target product may also include at least one of text review and type tag. The type tag is used to indicate that the multimedia content of the target product is determined based on the review material of the target product.

In addition, the review material of the target product may be stored in the client or in other electronic devices, which is not limited in the disclosure.

As an example, the specific implementation of the target product may be referred to the product 1 of the embodiments shown in FIGS. 2A-2P. The specific implementation of the review material of the target product may be referred to the embodiments shown in FIGS. 2A-2P containing the picture review of product 1, the multimedia review of product 1, the text review of product 1 and the type tag of the video 2. The specific implementation of step S101 may be referred to the description of obtaining the picture review of product 1, the multimedia review of product 1, the text review of product 1, and the type tag of the video 2 in the embodiments shown in FIG. 2C-2E, which will not be repeated here.

S102. determining multimedia content of the target product based on the review material of the target product.

The client can determine the multimedia content of the target product by processing the review material of the target product in the form of multimedia. Wherein, the disclosure does not limit the specific implementation of the multimedia content of the target product.

In some embodiments, when the review material of the target product includes multimedia comments of the target product, the client can use the multimedia comments of the target product as the multimedia content of the target product, and can also obtain the multimedia content of the target product by performing processing, such as cropping, adjusting music, adjusting filters, etc., on the multimedia comments of the target product.

In other embodiments, when the review material of the target product includes a picture comment of the target product, the client can obtain the multimedia content of the target product by performing processing, such as adding transitions, adding music, adding filters, etc., on the picture comment of the target product.

In other embodiments, when the review material of the target product includes a multimedia comment of the target product and a picture comment of the target product, the client can obtain the multimedia content of the target product by performing processing, such as splicing or inserting etc., on all or part of the multimedia comment of the target product with the picture comment of the target product and performing processing, such as cropping, adjusting music, adjusting filters, etc. on the processed multimedia content.

In addition, when the review material of the target product also includes text review and/or type tag, the client can display the text review and/or type tag floating on top of the playback screen of the multimedia content of the target product to facilitate prompting that the multimedia content of the target product is determined based on the comment material of the target product when reviewing the target product.

As an example, the specific implementation of the multimedia content of the target product may be referred to the description of the video 2 in the embodiments shown in FIGS. 2A-2P. The specific implementation of step S102 may be referred to the description of determining the video 2 by the Application 1 in the embodiments shown in FIGS. 2F-2J, which will not be repeated here.

S103. after receiving a post instruction for the target product, sending the multimedia content of the target product to a server.

The user can perform operations such as click, double-click, long press, and slide for the target product on the screen of the electronic device. The electronic device can detect the above operations and convert the above operations into a post instruction for the target product.

Wherein, the disclosure does not limit the specific implementation of the post instruction for target products. As an example, the specific implementation of the post instruction for the target product can refer to the instruction generated by the operation of clicking the control 116 in the embodiment shown in FIG. 2F or FIG. 2G, or the instruction generated by the operation of clicking the control 119 in the embodiment shown in FIG. 2H, which will not be repeated here.

A client can receive a post instruction for a target product through an electronic device. After receiving the post instruction for the target product, the client can send multimedia content of the target product to a server.

Wherein, in addition to the multimedia content of the target product, the client can also send to the server content such as review material of the target product, user information of the target product (such as account avatar and account nickname, etc.), service review of the target product (such as logistics service review and service attitude review) etc.

As an example, the specific implementation of step S103 may be referred to the description of Application 1 sending related content of commenting on product 1 to the server in the embodiments shown in FIGS. 2E-2K, which will not be repeated here.

The product review method provided by the present disclosure, while reviewing a target product, a client can obtain review material of the target product, and determine multimedia content of the target product based on the review material of the target product. After receiving a post instruction for the target product, the client can send the multimedia content of the target product to a server. Therefore, while commenting on the target product, multimedia content for the target product can be independently created and postd, adding a new interactive method for users to review the target product, solving the problem of the existing interaction methods being simplex, and also providing a channel for users to create and post multimedia content for the target product in clients, which simplifies the operation of creating and releasing multimedia content for users, reduces the cost for users to create and post multimedia content, and enables users to continue to interact with the target product, thereby improving the interactive experience for users to review the target product.

Based on the description of the above embodiments, the client can receive the multimedia content of the target product from the server. The user can perform operations such as click, double-click, long press, and slide etc., for the multimedia content of the target product on the screen of the electronic device. The electronic device can detect the above operations and convert the above operations into a playback instruction for the multimedia content of the target product.

The client can receive the playback instruction for the multimedia content of the target product through the electronic device . After receiving the playback instruction for the multimedia content of the target product, the client can play the multimedia content of the target product.

Wherein, the present disclosure does not limit the specific implementation of the playback instruction for the multimedia content of the target product. As an example, the specific implementation of the playback instruction for the multimedia content of the target product may be referred to the instruction generated by the Application 1 playing the video 2 in the embodiment shown in FIG. 2L, or the instruction generated by the operation of clicking the control 204 in the embodiment shown in FIG. 2M, which will not be repeated here.

In summary, the client can play the multimedia content of the target product, making it possible to flexibly create and post multimedia content while commenting on the target product.

Based on the description of the above embodiments, while playing the multimedia content of the target product, in addition to displaying the playback screen, the client may also display a type tag.

In some embodiments, the user can perform operations, such as click, double-click, long press, slide, etc. for the type tag on the screen of the electronic device. The electronic device can detect the above operations and convert the above operations into a trigger instruction for the type tag.

The client can receive the trigger instruction for the type tag through the electronic device. After receiving the trigger instruction for the type tag, the client can display the product details page of the target product.

Wherein, the product details page of the target product is used to display the product details of the target product and trigger the purchase of the target product. The disclosure does not limit the specific implementation of the product details page of the target product. As an example, the specific implementation of the product details page of the target product may be referred to the description of the product details page of product 1 in the embodiment shown in FIG. 2O or FIG. 2P, which will not be repeated here.

Therefore, the client can jump from the playback page of the multimedia content of the target product to the product details page of the target product, which facilitates the user to view the specific information of the target product in time, and helps the user to perform processing such as adding the target product to favorites, viewing the store to which it belongs, and purchasing, etc.

In addition, in some embodiments, the user can perform operations such as click, double-click, long press, slide, etc., for the comment material of the target product on the screen of the electronic device. The electronic device can detect the above operations and convert the above operations into a viewing instruction for the comment material of the target product.

The client can receive the viewing instruction for the comment material of the target product through the electronic device. After receiving the viewing instruction of the comment material of the target product, the client can jump to the review details page of the target product, and display the comment material of the target product in the review details page of the target product.

Wherein, the review details page of the target product is used to display user information of all users who have purchased the target product, as well as content such as text reviews, picture reviews, multimedia reviews, etc., posted by each user. The disclosure does not limit the specific implementation of the review details page of the target product.

Therefore, the client can jump from the playback page of the product details page of the target product to the review details page of the target product, which facilitates the user to quickly view all reviews of the target product, helps the user make decision on whether to purchase the target product in time, and improves the user experience.

Based on the description of the above embodiments, the client can receive the comment material of the target product from the server. The user can perform operations such as click, double-click, long press, slide, etc., for the comment material of the target product on the screen of the electronic device. The electronic device can detect the above operations and convert the above operations into a viewing instruction for the comment material of the target product.

The client can receive the viewing instruction for the comment material of the target product through the electronic device. After receiving the viewing instruction for the comment material of the target product, the client can display the comment material of the target product on the review details page of the target product.

It should be noted that the server can receive the comment material of the target product from the client, and can also process the multimedia content of the target product to obtain the comment material of the target product, which is not limited in the disclosure.

Wherein, the disclosure does not limit the specific implementation of the viewing instruction for the comment material of the target product. For example, the specific implementation of the viewing instruction for the comment material of the target product may be referred to the instruction generated by the Application 1 displaying the area 207 in the embodiment shown in FIG. 2P, or the instruction generated by the operation of sliding the window 206 in the embodiment shown in FIG. 2O, which will not be repeated here.

In summary, the client can display the comment material of the target product, so that while commenting on the target product, the display of the comment material can be flexibly realized.

Based on the description of the embodiment of the above step S102, the client can determine the multimedia content of the target product in a variety of ways.

While commenting on the target product, the client can display the review post page of the target product. Wherein, the review post page of the target product is used to trigger to comment on the target product. The disclosure does not limit the specific implementation of the review post page of the target product. As an example, the specific implementation of the review post page of the target product may be referred to the description of the user interface 13 in the embodiment shown in FIGS. 2C-2G, which will not be repeated here.

In some embodiments, the client may display a first control in the review post page of the target product. Wherein, the first control is used to trigger the uploading of comment material of the target product. The disclosure does not limit the specific implementation of the first control. As an example, the specific implementation of the first control may refer to the description of the control 106 in the embodiment shown in FIGS. 2C-2E, which will not be repeated here.

Therefore, the user can perform operations such as click, double-click, long press, slide, etc., for the first control on the screen of the electronic device. The electronic device can detect the above operations and convert the above operations into a trigger instruction for the first control.

The client can receive the trigger instruction for the first control through the electronic device. After receiving the trigger instruction for the first control, the client can obtain the review material of the target product. Wherein, the specific implementation of the above steps may refer to the description of the Application 1 obtaining the video comment and picture comment of product 1 in the embodiments shown in FIGS. 2C-2D, which will not be repeated here.

After obtaining the review material of the target product, the client can display a second control on the review post page of the target product. Alternatively, the client may display the second control on the review post page of the target product at the initial moment of displaying the review post page of the target product.

Wherein, the second control is used to trigger sending the multimedia content of the target product to the server. The disclosure does not limit the specific implementation of the second control. As an example, the specific implementation of the second control may be referred to the description of the area 113 in the embodiments shown in FIGS. 2D-2E, which will not be repeated here.

Therefore, the user can perform operations such as click, double-click, long press, slide, etc., for the second control on the screen of the electronic device. The electronic device can detect the above operations and convert the above operations into a trigger instruction for the second control.

The client can receive the trigger instruction for the second control through the electronic device. After receiving the trigger instruction for the second control, the client may determine to send the multimedia content of the target product generated based on the review material of the target product to the server. Wherein, the specific implementations of the above steps may refer to the description of the Application 1 determining to send the video comment and picture comment of product 1 to the server in the form of multimedia in the embodiments shown in FIG. 2D-2E, which will not be repeated here.

After determining to send the multimedia content of the target product generated based on the review material of the target product to the server, the client may display a third control in the review post page of the target product. Alternatively, the client may display the third control in the review post page of the target product at the initial moment of displaying the review post page of the target product.

Wherein, the third control is used to trigger the determination of the multimedia content of the target product. The disclosure does not limit the specific implementation of the third control. As an example, the specific implementation of the third control may be referred to the control 110 in the embodiment shown in FIG. 2E, the control 1154 in the embodiment shown in FIG. 2F-2G, and the controls and/or areas in the user interface 14 in the embodiment shown in FIG. 2H, which will not be repeated here.

Therefore, the user can perform operations such as click, double-click, long press, slide, etc., for the third control on the screen of the electronic device. The electronic device can detect the above operations and convert the above operations into a trigger instruction for the third control.

The client can receive the trigger instruction for the third control through the electronic device. After receiving the trigger instruction for the third control, the client can determine the multimedia content of the target product based on the review material of the target product and playback parameters of the multimedia content of the target product. The specific implementation of the above step may be referred to the description of Application 1 generating the video 2 based on the video comment and picture comment of product 1 in the embodiments shown in FIGS. 2E-2J, which will not be repeated here.

In summary, the client can flexibly determine the multimedia content of the target product based on the user's subjective wishes, so that the multimedia content of the target product can be richer and more varied.

Based on the description of the above embodiments, the client can determine the multimedia content of the target product based on the review material of the target product in a variety of ways.

In some embodiments, the client can generate multimedia content of the target product based on the review material of the target product and the playback parameters of the multimedia content of the target product. Wherein, the specific implementation of the above steps may be referred to the description of the Application 1 generating the video 2 based on the video comment of product 1 and the picture comment of product 1 in the embodiments shown in FIGS. 2E-2F, which will not be repeated here.

The client can play the multimedia content of the target product and display a fourth control on the preview page of the target product. Wherein, the preview page of the target product is used to play the multimedia content of the target product, so as to display the multimedia content of the target product to the user vividly. The fourth control is used to trigger the display of the editing page of the target product. The editing page of the target product is used to perform at least one type of processing on the multimedia content of the target product, such as music editing, multimedia content cropping, text addition, sticker addition, special effects addition or permission setting, so as to facilitate the user to get the multimedia content of the target product with a playback effect that the user wants based on their subjective wishes. The disclosure does not limit the specific implementations of the preview page of the target product, the fourth control, and the editing page of the target product.

As an example, the specific implementation of the preview page of the target product may be referred to the description of the area 1151 in the embodiment shown in FIG. 2F, the specific implementation of the fourth control may be referred to the control 1154 in the embodiment shown in FIG. 2F, the specific implementation of the editing page of the target product may be referred to the description of the user interface 14 in the embodiment shown in FIG. 2H, and the specific implementation of the above step may be referred to the description of the Application 1 playing the video 2 in the embodiment shown in FIG. 2F, which will not be repeated here.

Therefore, the user can perform operations such as click, double-click, long press, slide, etc., for the fourth control on the screen of the electronic device. The electronic device can detect the above operations and convert the above operations into a trigger instruction for the fourth control.

The client can receive the trigger instruction for the fourth control through the electronic device. After receiving the trigger instruction for the fourth control, the client may display the editing page of the target product.

In some embodiments, the user can perform operations such as click, double-click, long press, slide, etc., for the fourth control on the screen of the electronic device. The electronic device can detect the above operations and convert the above operations into a processing instruction for the editing page of the target product.

The client can receive the processing instruction for the editing page of the target product through the electronic device. After receiving the processing instruction for the editing page of the target product, the client can update the playback parameters of the multimedia content of the target product, and determine the multimedia content of the target product based on the updated playback parameters of the multimedia content of the target product.

Wherein, receiving the processing instruction for the editing page of the target product can be understood as the user entering the editing page of the target product and processing the multimedia content of the target product.

In other embodiments, if a processing instruction for the editing page of the target product is not received, or after receiving a no processing instruction for the editing page of the target product, the client may determine that the multimedia content of the target product is the initially generated multimedia content of the target product.

Wherein, a processing instruction for the editing page of the target product being not received can be understood as that the user has not entered the editing page of the target product to process the multimedia content of the target product. Receiving a no processing instruction for the editing page of the target product can be understood as that the user has entered the editing page of the target product and has not processed the multimedia content of the target product.

As an example, the specific implementation of the above step may be referred to the description of the Application 1 determining the video 2 in the embodiments shown in FIG. 2F-2J, which will not be repeated here.

Based on the description of the above embodiments, the user can perform operations such as click, double-click, long press, slide, etc., for the multimedia content of the target product on the screen of the electronic device. The electronic device can detect the above operations and convert the above operations into a pause playback instruction for the multimedia content of the target product.

The client can receive the pause playback instruction for the multimedia content of the target product through the electronic device . After receiving the pause playback instruction for the multimedia content of the target product, the client can pause the playback of the multimedia content of the target product in the preview page of the target product. Wherein, the specific implementation of the pause playback instruction for the multimedia content of the target product may be referred to the description of the instruction generated by the operation of clicking the area 1151 in the embodiment shown in FIG. 2F. The specific implementation of the above step may be referred to the description of the Application 1 stopping playing video 2 in the embodiment shown in FIGS. 2F-2G, which will not be repeated here.

Based on the description of the above embodiment, the client may display a fifth control on the preview page of the target product or the editing page of the target product. Wherein, the fifth control is used to trigger sending the comment material of the target product and the multimedia content of the target product to the server. The disclosure does not limit the specific implementation of the fifth control. As an example, the specific implementation of the fifth control may be referred to the description of the control 116 in the embodiment shown in FIG. 2F or FIG. 2G, or the description of the control 119 in the embodiment shown in FIG. 2H, which will not be repeated here.

Therefore, the user can perform operations such as click, double-click, long press, slide, etc., for the fifth control on the screen of the electronic device. The electronic device can detect the above operations and convert the above operations into a trigger instruction for the fifth control.

The client can receive the trigger instruction for the fifth control through the electronic device. After receiving the trigger instruction for the fifth control, the client can send the review material of the target product and the multimedia content of the target product to the server. The specific implementation of the above step may be referred to the description of the Application 1 sending the picture comment of product 1, the multimedia comment of product 1 and the video 2 to the server in the embodiments shown in FIGS. 2F-2J, which will not be repeated here.

Based on the description in the above embodiments, after successfully sending the review material of the target product and the multimedia content of the target product to the server, the client can display that the target product has been successfully reviewed by using methods such as text or identification, etc. Wherein, the specific implementation of the above step may be referred to the description of the user interface 17 in the embodiment shown in FIG. 2K, which will not be repeated here.

Illustratively, the present disclosure provides a product review apparatus.

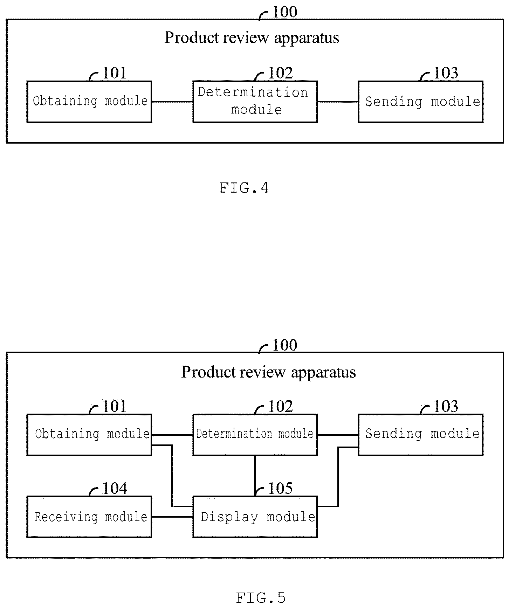

Please refer to FIG. 4, which is a schematic structural diagram of a product review apparatus provided by an embodiment of the present disclosure. The product review apparatus of the present disclosure can be provided in a client, and can realize the operations of the client corresponding to the product review method in the embodiments of FIG. 1, FIG. 2A-2P and FIG. 3.

As shown in FIG. 4, the product review apparatus 100 provided by the present disclosure may include: an obtaining module 101, a determination module 102 and a sending module 103.

The obtaining module 101 is configured to obtain review material of a target product while reviewing the target product;

The determination module 102 is configured to determine multimedia content of the target product based on the review material of the target product;

The sending module 103 is configured to send the multimedia content of the target product to a server after receiving a post instruction for the target product.

Please refer to FIG. 5, which is a schematic structural diagram of a product review apparatus provided by an embodiment of the present disclosure. As shown in FIG. 5, the product review apparatus 100 provided by the present disclosure, on the basis of the apparatus structure shown in FIG. 4, may further include: a receiving module 104 and a display module 105.

The receiving module 104 is configured to receive the multimedia content of the target product from the server;

The display module 105 is configured to play the multimedia content of the target product after receiving a playback instruction for the multimedia content of the target product.

In some embodiments, the multimedia content of the target product includes: a playback screen and a type tag, the type tag being used to indicate that the multimedia content of the target product is determined based on the review material of the target product; and

The display module 105 is further configured to display a product details page of the target product after receiving a trigger instruction for the type tag, the product details page of the target product being used to display product details of the target product and trigger the purchase of the target product.

In some embodiments, the display module 105 is further configured to jump to a review details page of the target product after receiving a viewing instruction for comment material of the target product, and display the comment material of the target product on the review details page of the target product.

In some embodiments, the sending module 103 is further configured to send the review material of the target product to the server after receiving a post instruction for the target product.

In some embodiments, the receiving module 104 is further configured to receive comment material of the target product from the server;

The display module 105 is further configured to display the comment material of the target product on the review details page of the target product after receiving a viewing instruction for the comment material of the target product.

In some embodiments, the obtaining module 101 is specifically configured to, when displaying a first control, a second control and a third control on a review post page of the target product, obtain the review material of the target product after receiving a trigger instruction for the first control;

The determination module 102 is configured to determine to send multimedia content of the target product generated based on the review material of the target product to the server after receiving a trigger instruction for the second control;

The determination module 102 is further configured to determine the multimedia content of the target product based on the review material of the target product and playback parameters of the multimedia content of the target product after receiving a trigger instruction for the third control.

In some embodiments, the determination module 102 is specifically configured to generate multimedia content of the target product based on the review material of the target product and the playback parameters of the multimedia content of the target product;

The display module 105 is further configured to play the multimedia content of the target product and display a fourth control on a preview page of the target product;

The display module 105 is further configured to display an editing page of the target product after receiving a trigger instruction for the fourth control, the editing page of the target product being used to perform at least one type of processings of editing music, cropping multimedia content, adding text, adding stickers, adding special effects or setting permissions to the multimedia content of the target product;

The determination module 102 is also specifically configured to update the playback parameters of the multimedia content of the target product after receiving a processing instruction for the editing page of the target product; determine the multimedia content of the target product based on the updated playback parameters of the multimedia content of the target product; and determine the multimedia content of the target product if a processing instruction for the editing page of the target product is not received, or after receiving a no processing instruction for the editing page of the target product.

In some embodiments, the display module 105 is further configured to pause the playback of the multimedia content of the target product on the preview page of the target product after receiving a pause playback instruction for the multimedia content of the target product.

In some embodiments, the display module 105 is further configured to display a fifth control on the preview page of the target product or the editing page of the target product;

The sending module 103 is further configured to send the review material of the target product and the multimedia content of the target product to the server after receiving a trigger instruction for the fifth control.

In some embodiments, the display module 105 is further configured to display that the target product has been successfully reviewed after the review material of the target product and the multimedia content of the target product are successfully sent to the server.

In some embodiments, the review material of the target product includes: picture review and/or multimedia review.

In some embodiments, the review material of the target product further includes: text review and/or type tag, the type tag being used to indicate that the multimedia content of the target product is determined based on the review material of the target product.

The product review apparatus provided by the present disclosure can execute the above method embodiments. Its specific implementation principles and technical effects may be referred to the above method embodiments, which will not be repeated here.

Exemplarily, the present disclosure provides a client, comprising: one or more processors; a memory; and one or more computer programs; wherein the one or more computer programs are stored in the memory; when the one or more processors execute the one or more computer programs, cause the client to implement the product review methods of the above embodiments.

Exemplarily, the present disclosure provides a chip system, which is applied to an electronic device including a display, a memory, and a sensor; the chip system includes: a processor; which, when executes computer instructions stored in the memory, the electronic device executes the product review methods of the above embodiments.

Exemplarily, the present disclosure provides a computer-readable storage medium having a computer program stored thereon, which, when executed by a processor, causes an electronic device to implement the product review methods of the above embodiments.

Exemplarily, the present disclosure provides a computer program product, which, when run on a computer, causes the computer to execute the product review methods of the above embodiments.

In the above embodiments, all or part of the functions may be implemented by software, hardware, or a combination of software and hardware. When implemented by software, it may be implemented in whole or in part in the form of a computer program product. A computer program product includes one or more computer instructions. When computer program instructions are loaded and executed on a computer, processes or functions according to the embodiments of the present disclosure are produced in whole or in part. The computer may be a general-purpose computer, a dedicated computer, a computer network, or other programmable apparatus. Computer instructions may be stored in computer-readable storage media. Computer-readable storage media can be any available media that can be accessed by a computer or a data storage device such as a server, data center, etc., that contains one or more integrated available media. The available media may be magnetic media (e.g., floppy disks, hard disks, tapes), optical media (e.g., DVDs), or semiconductor media (e.g., solid state disks (SSDs)), etc.

It should be noted that, herein, relational terms such as "first" and "second" are only used to distinguish one entity or operation from another entity or operation, and do not necessarily require or imply there is any such actual relationship or sequence between these entities or operations. Furthermore, the terms "comprise", "include" or any other variations thereof are intended to cover a non-exclusive inclusion such that a process, method, article, or device that comprises a list of elements includes not only those elements, but also other elements that are not expressly listed, or elements inherent to the process, method, article or device. Without further limitation, an element qualified by the statement "comprises a... " does not exclude the presence of additional identical elements in the process, method, article, or device that includes the element.

The above are only specific embodiments of the present disclosure, enabling those skilled in the art to understand or implement the present disclosure. Various modifications to these embodiments will be readily apparent to those skilled in the art, and the generic principles defined herein may be practiced in other embodiments without departing from the spirit or scope of the disclosure. Therefore, the present disclosure is not to be limited to the embodiments described herein but is to be accorded with the widest scope consistent with the principles and novel features disclosed herein.

## Claims

1. A product review method, comprising:
while reviewing a target product, obtaining review material of the target product;
determining multimedia content of the target product based on the review material of the target product; and
after receiving a post instruction for the target product, sending the multimedia content of the target product to a server.

2. The method according to claim 1, the method further comprising:
receiving the multimedia content of the target product from the server;
after receiving a playback instruction for the multimedia content of the target product, playing the multimedia content of the target product.

3. The method according to claim 2, the multimedia content of the target product comprises: a playback screen and a type tag, the type tag being used to indicate that the multimedia content of the target product is determined base on the review material of the target product;
the method further comprising:
after receiving a trigger instruction for the type tag, displaying a product details page of the target product, the product details page of the target product being used to display the product details of the target product and trigger the purchase of the target product.

4. The method according to claim 3, the method further comprising:
after receiving a viewing instruction for comment material of the target product, jumping to a review details page of the target product, and displaying the comment material of the target product on the review details page of the target product.

5. The method according to any one of claims 1 to 4, after receiving a post instruction for the target product, the method further comprising:
sending the review material of the target product to the server.

6. The method according to claim 5, **characterized in that**, the method further comprising:
receiving comment material of the target product from the server;
after receiving a viewing instruction for the comment material of the target product, displaying the comment material of the target product on the review details page of the target product.

7. The method according to any one of claims 1 to 6, when displaying a first control, a second control and a third control on a review post page of the target product, the method comprising:
after receiving a trigger instruction for the first control, obtaining the review material of the target product;
after receiving a trigger instruction for the second control, determining to send multimedia content of the target product generated based on the review material of the target product to the server; and
after receiving a trigger instruction for the third control, determining the multimedia content of the target product based on the review material of the target product and playback parameters of the multimedia content of the target product.

8. The method according to claim 7, the method comprising:
generating multimedia content of the target product based on the review material of the target product and the playback parameters of the multimedia content of the target product;
playing the multimedia content of the target product and displaying a fourth control on a preview page of the target product;
after receiving a trigger instruction for the fourth control, displaying an editing page of the target product, the editing page of the target product being used to perform at least one type of processings of editing music, cropping multimedia content, adding text, adding stickers, adding special effects or setting permissions to the multimedia content of the target product;
after receiving a processing instruction for the editing page of the target product, updating the playback parameters of the multimedia content of the target product; and determining the multimedia content of the target product based on the updated playback parameters of the multimedia content of the target product; and
determining the multimedia content of the target product if a processing instruction for the editing page of the target product is not received, or after receiving a no processing instruction for the editing page of the target product.

9. The method according to claim 8, the method further comprising:
after receiving a pause playback instruction for the multimedia content of the target product, pausing the playback of the multimedia content of the target product on the preview page of the target product.

10. The method according to any one of claims 7 to 9, the method further comprising:
displaying a fifth control on the preview page of the target product or the editing page of the target product;
after receiving a trigger instruction for the fifth control, sending the review material of the target product and the multimedia content of the target product to the server.

11. The method according to any one of claims 1 to 10, the method further comprising:
after sending the review material of the target product and the multimedia content of the target product successfully to the server, displaying that the target product has been successfully reviewed.

12. The method according to any one of claims 1 to 11, wherein the review material of the target product comprises at least one of picture review and multimedia review.

13. The method according to claim 12, wherein the review material of the target product further comprises at least one of text review and type tag, the type tag being used to indicate that the multimedia content of the target product is determined based on the review material of the target product.

14. A product review apparatus, the apparatus comprises:
an obtaining module to obtain review material of a target product while reviewing the target product;
a determination module to determine multimedia content of the target product based on the review material of the target product; and
a sending module to send the multimedia content of the target product to a server after receiving a post instruction for the target product.

15. A client terminal, comprising: one or more processors; a memory; and one or more computer programs; wherein the one or more computer programs are stored in the memory; **characterized in that**, when the one or more processors execute the one or more computer programs, cause the client to implement the product review method according to any one of claims 1-13.

16. A computer storage medium including computer instructions, which, when run on an electronic device, cause an electronic device to execute the product review method according to any one of claims 1-13.

17. A computer program product, which, when run on a computer, causes the computer to execute the product review method according to any one of claims 1-13.
